## Europäisches Patentamt
## European Patent Office
## Office européen des brevets

(11) Veröffentlichungsnummer: **0 247 333**
**B1**

(12) **EUROPÄISCHE PATENTSCHRIFT**

(45) Veröffentlichungstag der Patentschrift: **30.01.91**

(51) Int. Cl.⁵: **A 22 C 17/00**

(21) Anmeldenummer: **87104987.0**

(22) Anmeldetag: **03.04.87**

(54) Hackblock für Fleisch- und Knochenmaterial.

(30) Priorität: **23.05.86 DE 3617328**

(43) Veröffentlichungstag der Anmeldung:
**02.12.87 Patentblatt 87/49**

(45) Bekanntmachung des Hinweises auf die Patenterteilung:
**30.01.91 Patentblatt 91/05**

(84) Benannte Vertragsstaaten:
**AT BE CH DE ES FR GB GR IT LI LU NL SE**

(56) Entgegenhaltungen:
**EP-A-0 068 447**
**CH-A- 175 514**
**CH-A- 260 261**
**DE-C- 201 778**
**DE-C- 398 833**
**DE-U-7 404 526**
**FR-A-2 224 090**
**US-A-1 734 853**

(73) Patentinhaber: **Heinrich Niederberger KG**
**Sylvensteinstrasse 60**
**D-8172 Lenggries/Obb. (DE)**

(72) Erfinder: **Niederberger, Heinrich**
**Sylvensteinstrasse 60**
**D-8172 Lenggries/Obb. (DE)**

(74) Vertreter: **Tiedtke, Harro, Dipl.-Ing. et al**
**Patentanwaltsbüro Tiedtke-Bühling-Kinne-**
**Grupe-Pellmann-Grams-Struif Bavariaring 4**
**Postfach 20 24 03**
**D-8000 München 2 (DE)**

Courier Press, Leamington Spa, England.

**Beschreibung**

Die Erfindung bezieht sich auf einen Hackblock für Fleischund Knochenmaterial nach dem Oberbegriff des Patentanspruchs 1.

Es sind Hackblöcke mit Kunststoffarbeitsplatten auf dem Markt, bei denen die Kunststoffarbeitsplatte fest mit einer ihr angeordneten Aufbauteilen verbunden ist. Im Zuge der häufigen, stoßartigen Beanspruchung der Kunststoffarbeitsplatte kommt es sehr häufig dazu, daß die Arbeitsplatte von ihrem Unterbau getrennt wird. Dies führt zu einem Schwingungsverhalten der Arbeitsplatte, das jedem Schlag eine darauf folgende Gegenbewegung der Arbeitsplatte folgen läßt, durch die erhebliche Beanspruchungen in den Armgelenken eines an dem Hackblock tätigen Beschäftigten entstehen.

Um die Dämpfungseigenschaften des aus lebensmitteltechnischer Sicht vorteilhaften Kunststoffs zu verbessern, wird in dem Dokument EP—A—68 447 ein Hack- und Schlagblock offenbart, bei dem unterhalb der Kunststoffarbeitsplatte ein einstellbares Polster, beispielsweise aus Schüttgut wie Sand, Kies etc. oder aus einem Hydraulikmedium, angeordnet ist. Dieses einstellbare Polster wird von unten gegen die Kunststoffarbeitsplatte vorgespannt, so daß über das Polster ein ständiger Gegendruck auf die Arbeitsplattenunterseite wirkt. Das Rückfedern der Kunststoffarbeitsplatte wird dabei im bekannten Fall dadurch erreicht, daß dem Polster eine Dämpfungswirkung bei Schlag- oder Stoßbelastung der Kunststoffarbeitsplatte übertragen wird.

Es hat sich gezeigt, daß diese Konstruktion verhältnismäßig raumgreifend wird und darüber hinaus verhältnismäßig großvolumige Kunststoffarbeitsplatten benötigt, um die Wölbung dieser Platte nach oben in zulässigen Grenzen zu halten. Wenn die Arbeitsfläche des Hack- und Schlagblocks angehoben wird, gelingt es selbst bei sehr dicken Kunststoffarbeitsplatten nicht mehr, unerwünschte Verformungen auszuschließen, ohne durch Verringerung der Vorspannung des Polsters von unten Prellwirkungen in Kauf zu nehmen.

Der Erfindung liegt daher die Aufgabe zugrunde, den gattungsgemäßen Hackblock derart weiterzuentwickeln, daß ein Schwingungsverhalten mit Rückschwingung der Kunststoffarbeitsplatte zuverlässig ausgeschlossen ist.

Diese Aufgabe wird durch die Merkmale im kennzeichnenden Teil des neuen Hauptanspruchs gelöst.

Durch die erfindungsgemäße Ausbildung des Hackblocks mit einer Spanneinrichtung, mit der die Kunststoffarbeitsplatte ständig in fester Anlage an eine Platte, wie z.B. eine Stahlplatte, gehalten wird, die infolge ihrer vergleichsweise großen Masse eine spürbare Rückschwingung vermeidet, lassen sich zum einen negative Auswirkungen auf die Armgelenke eines Beschäftigten vermeiden und wird zum anderen die Trennwirkung eines ausgeführten Schlags erheblich erhöht, da ein Ausweichen der Kunststoffarbeitsplatte nach unten zuverlässig verhindert wird.

Durch die Ausbildung gemäß Patentanspruch 2 wird eine wenig aufwendige Montage von Stahlplatte und Grundgestell sichergestellt.

Die Ausbildung gemäß Patentanspruch 3 und 4 verhindert, daß in unzulässiger Weise Belastungsspitzen von der Stahlplatte auf das Grundgestell übertragen werden. Die Anbringung der Spanneinrichtung gemäß Patentanspruch 5, führt in vorteilhafter Weise eine durch einfache Drehung veränderbare räumliche Anordnung zwischen Spanneinrichtung und Stahlplatte her, durch die ein zuverlässiges Verspannen der Kunststoffarbeitsplatte an der Stahlplatte ermöglicht ist. Die Ausbildung gemäß Patentanspruch 6 sichert eine leichte seitliche Verschiebbarkeit der Kunststoffarbeitsplatte auf der Strahlplatte, so daß ein Auswechseln der Kunststoffarbeitsplatte leicht möglich ist. Die Vorspannung gemäß Patentanspruch 7 bzw. 8 sichert eine feste Anlage der Kunststoffarbeitsplatte 10 an der Stahlplatte 2 während der zwischen zwei Nachspannvorgängen am Handrad verstreichenden Zeiträume. Die Ausbildung gemäß Patentanspruch 9 ermöglicht eine gleichzeitige Betätigung sämtlicher Spannschrauben, wobei auf jede Spannschraube dieselbe Kraft geleitet wird. Das Durchgreifen der Stahlplatte durch die Spannschrauben gemäß Patentanspruch 10 ermöglicht eine kompakte Ausbildung des Schraubenverbindungselements und dessen Anordnung innerhalb des Aufnahmerahmens, so daß die gesamte Spanneinrichtung gegen schädliche Auswirkungen von außen geschützt ist. Die Stahlplatte in den Abmessungen gemäß Patentanspruch 11 ermöglicht eine großflächige Anlage zwischen Kunststoffarbeitsplatte und Stahlplatte. Die Ausbildung des Aufnahmerahmens gemäß Patentanspruch 12 schützt einerseits die Spanneinrichtung und sichert andererseits deren einfache Betätigung mittels des Handrades.

Weitere Vorteile und Merkmale der Erfindung ergeben sich aus der nunmehr folgenden Beschreibung eines Ausführungsbeispiels.

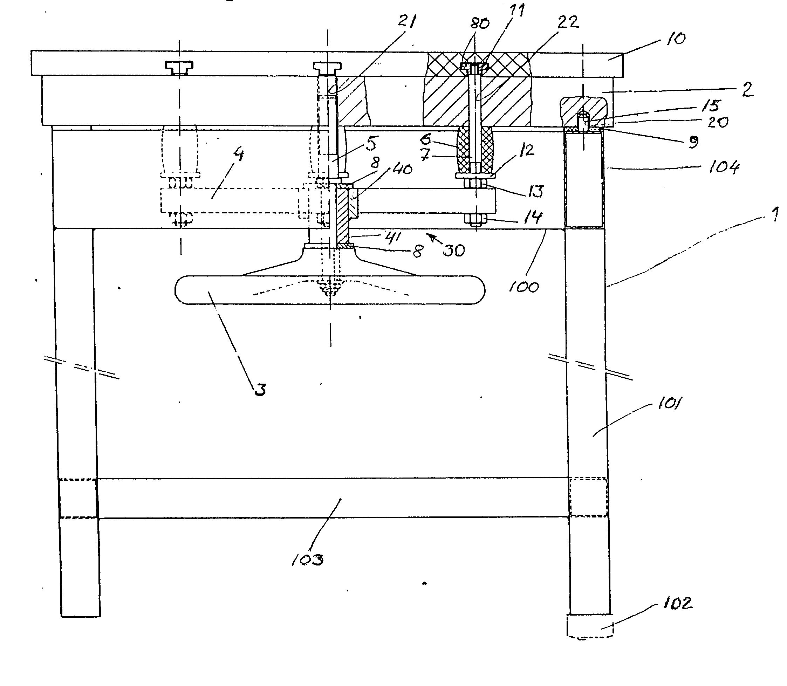

Ein in der einzigen Figur dargestellter Hackblock dient als Auflage für Fleisch- und Knochenmaterial aller Art, das zerhackt bzw. zerkleinert werden soll.

Der Hackblock gliedert sich in drei Hauptbaugruppen, nämlich ein Grundgestell 1 mit einem Aufnahmerahmen 100, eine Strahlplatte 2 mit einer Spanneinrichtung 30 und eine Kunststoffarbeitsplatte 10.

Das Grundgestell 1 weist mehrere, vorzugsweise vier, vertikal angeordnete Stützen 101 auf. Am Unterende der Stützen 101 kann ein Fußteil 102 befestigt sein. Am unteren Endabschnitt der Stützen 101 sind dieselben durch Verstrebungsteile 103, die sich im wesentlichen horizontal erstrecken, miteinander verbunden, durch die ein stabiler Stand des Grundgestells 1 gesichert ist.

Das Oberende der Stützen 101 ist mit dem Aufnahmerahmen 100 verbunden, der durch die Oberenden benachbarter Stützen 101 miteinander verbindende, hohle Seitenbleche 104 gebildet wird. Auf der Oberkante der Seitenbleche 104 sind mehrere Zapfen 15 ausgebildet, die von den Dämpfungsscheiben 9 umgeben sind und mit ihren Oberenden in Bohrungen 20 eingreifen, die auf der Unterseite der Stahlplatte 2 an deren Rand entsprechend ausgebildet sind.

Sämtliche Elemente des Grundgestells 1 sind vorzugsweise aus Edelstahlwerkstoffen hergestellt.

Die Dämpfungsscheiben 9 sind vorzugsweise aus Weich-PVC und verhindern zu einem erheblichen Teil die Übertragung von Schwingungen auf das Grundgestell 1, die beim Hackvorgang durch die Schläge verursacht werden.

Die Stahlplatte 2 lagert über die Dämpfungsscheiben 9 auf dem Aufnahmerahmen 100. Eine horizontale Verschiebung der Stahlplatte 2 auf dem Aufnahmerahmen 100 wird durch das Zusammenwirken der Zapfen 15 mit den in der Unterseite der Stahlplatte 2 ausgebildeten Bohrungen 20 zuverlässig verhindert. Die Bohrungen 20 überragen in ihrer Tiefe die freie Länge der Zapfen 15, so daß ein Aufliegen der Stahlplatte 2 auf den Spitzen der Zapfen 15 zuverlässig vermieden ist und die Stahlplatte 2 auch dann noch auf den Dämpfungsscheiben 9 aufliegt, wenn letztere infolge von Materialermüdung etc. zusammengedrückt sind.

Durch den äußeren Mittelabschnitt der Stahlplatte 2 sind mehrere durchgehende, zylindrische Bohrungen 22 ausgebildet. In die Mitte der Stahlplatte 2 ist eine Gewindebohrung 21 eingebracht. Die Oberflächen der Stahlplatte 2 sind feuerverzinkt.

Die Gewindespindel 5 greift mit ihrem oberen Endabschnitt in die Gewindebohrung 21 ein. Am unteren Ende der Gewindespindel 5 ist ein Handrad 3 befestigt. Das Handrad 3 ist mittels einer Schraubverbindung drehfest mit der Gewindespindel 5 verbunden. Lediglich der das Handrad 3 tragende Endabschnitt der Gewindespindel 5 ragt nach unten über die Unterkante des Aufnahmerahmens 100 vor.

Durch Drehung des Handrades 3 in der einen oder der entgegengesetzten Richtung kann die Gewindespindel 5 innerhalb der Gewindebohrung 21 der Stahlplatte 2 nach unten bzw. nach oben versetzt werden. Bei einer Versetzung nach oben wird die Kunststoffarbeitsplatte 10 durch die mit der Gewindespindel verbundenen Spannschrauben 7 bzw. die die auf den Spannschrauben 7 sitzenden Nutensteine 11 von der Stahlplatte 2 abgehoben. Bei einer Versetzung der Gewindespindel 5 innerhalb der Bohrung 21 nach unten wird die Kunststoffarbeitsplatte 10 entsprechend umgekehrt gegen die Stahlplatte 2 gezogen.

Ein Auswechseln der Kunststoffarbeitsplatte erfolgt nach einem Abheben der Kunststoffarbeitsplatte 10 von der Strahlplatte 2, wobei die Kunststoffarbeitsplatte längs den Nutensteinen 11 in seitlicher Richtung von der Strahlplatte 2 abgeschoben wird. Das Aufsetzen einer Kunststoffarbeitsplatte 10 erfolgt durch Auflegen eines Randabschnitts der Kunststoffarbeitsplatte 10 auf einen entsprechenden Randabschnitt der Stahlplatte 2, wobei darauf zu achten ist, daß die Nutensteine 11 mit den Nuten 80 in Eingriff gebracht werden, und sodann durch einfaches seitliches Verschieben der Kunststoffarbeitsplatte 10 auf der Stahlplatte 2. Die Befestigung der Kunststoffarbeitsplatte 10 auf der Stahlplatte 2 erfolgt durch eine entsprechende Drehung des Handrades 3. Während der Standzeit einer Kunststoffarbeitsplatte 10 ist ein mehrmaliges Nachspannen derselben gegen die Strahlplatte 2 durch einfache Drehung des Handrades 3 möglich.

Auf der Stahlplatte 2 ruht die Kunststoffarbeitsplatte 10. In der Unterseite der Kunststoffarbeitsplatte 10 sind T-förmigen Nuten 80 ausgebildet. Die Nuten 80 entspechechen in ihrer Breite an der Öffnungsfläche, die gegenüber dem Oberabschnitt der Nut 80 verengt ist, dem Durchmesser der Bohrungen 22, und sie sind derart angeordnet und beabstandet, daß jede Nut 80 zumindest eine Bohrung 22 überdeckt.

Die Kunststoffarbeitsplatte 10 ist in ihren Abmessungen etwas größer als die Stahlplatte 2 und überragt daher dieselbe an den Rändern. Sie ist aus Niederdruck-Polyethylen hergestellt und gewährleistet ein ideales Hacken und Schneiden. Durch Anwendung dieses Werkstoffs wird dem Hack- und Schneidwerkzeug eine gute Schneide über lange Standzeiten erhalten.

In den Nuten 80 sitzen T-förmigen Nutensteine 11, die in ihrer Form der T-Form der Nuten 80 entsprechen und auf die Oberenden von Spannschrauben 7 aufgeschraubt sind, die die Bohrungen 22 nach unten durchragen. An ihrem aus der Stahlplatte 2 austretenden Abschnitt ist jede Spannschraube 7 von einer Mantelfeder 6 umgeben, der durch eine in Axialrichtung fest auf der Spannschraube 7 sitzende Druckscheibe 12 in Richtung auf die Unterseite der Stahlplatte 2 zusammengedrückt wird. Die Druckscheibe 12 ist durch eine Mutter 13 axial auf der Spannschraube 7 befestigt. Die Mantelfedern werden mittels der Muttern 13 auf eine Vorspannung von ca. 0,1 kp/cm$^2$ eingestellt, was einer Federvorspannung von ca. 60 kp/Feder entspricht. Zwischen der Mutter 13 und einer nahe dem Unterende der Spannschraube 7 angeordneten Mutter 14 ist ein entsprechend mit einer zylindrischen Bohrung verschener Ausleger eines Schraubenverbindungselements 4 befestigt. Die Ausleger des Schraubenverbindungselements 4 sitzen auf einem gemeinsamen Kranz 40, der drehfest mit einer Nabenhülse 41 verbunden ist, die ihrerseits zwischen zwei Bundscheiben 8 axial fixiert auf der Gewindespindel 5 sitzt.

Ein Aufsetzen der Stahlplatte 2 auf das Grundgestell 1 erfolgt durch einfaches Auflegen, wobei darauf zu achten ist, daß die Zapfen 15 mit den in der Unterseite der Stahlplatte 2 ausgebildeten Bohrungen 20 in Eingriff kommen. Eine weitere Befestigung der Stahlplatte 2 am Grundgestell erübrigt sich, da ein sicherer Sitz der Strahlplatte 2 durch ihr Eigengewicht gewährleistet ist.

Es wird ein Hackblock für Fleisch- und Knochenmaterial geschaffen, der mit einem Grundgestell, an dessen Oberende ein Aufnahmerahmen angeordnet oder ausgebildet ist, und einer auf dem

Aufnahmerahmen gelagerten Kunststoffarbeitsplatte versehen ist.

Zwischen dem Aufnahmerahmen und der Kunststoffarbeitsplatte ist eine Stahlplatte angeordnet, die ortsfest auf dem Aufnahmerahmen sitzt und eine Spanneinrichtung hält, mittels der die Kunststoffarbeitsplatte gegen die Stahlplatte verspannbar ist.

**Patentansprüche**

1. Hackblock für Fleisch- und Knochenmaterial, mit einem Grundgestell (1), an dessen Oberende ein Aufnahmerahmen (100) angeordnet oder ausgebildet ist, der seinerseits eine Kunststoffarbeitsplatte (10) lagert, dadurch gekennzeichnet, daß zwischen dem Aufnahmerahmen (100) und der Kunststoffarbeitsplatte (10) eine Platte (2) vergleichesweise größer Masse angeordnet ist, die ortsfest auf dem Aufnahmerahmen (100) sitzt und eine Spanneinrichtung (30) hält, mittels der die Kunststoffarbeitsplatte (10) gegen die Platte (2) verspannbar ist.

2. Hackblock nach Anspruch 1, dadurch gekennzeichnet, daß die Platte (2) an ihrem Rand Bohrungen (20) aufweist, in die am Aufnahmerahmen (100) entsprechend ausgebildete Zapfen (15) eingreifen.

3. Hackblock nach Anspruch 1 oder 2, dadurch gekennzeichnet, daß zwischen der Platte (2) und dem Aufnahmerahmen (100) Dämpfungsscheiben (9) sitzen.

4. Hackblock nach Anspruch 2 und 3, dadurch gekennzeichnet, daß um jeden Zapfen (15) eine Dämpfungsscheibe (9) angeordnet ist.

5. Hackblock nach einem der Ansprüche 1 bis 4, dadurch gekennzeichnet, daß die Platte von einer Stahlplatte (2) gebildet ist, die in ihrem Mittelabschnitt eine Gewindebohrung (21) aufweist, in die mit ihrem oberen Endabschnitt eine Gewindespindel (5) eingreift, die über ihren entgegengesetzten Endabschnitt drehfest mit einem Handrad (3) verbunden ist und über axial an ihr fixierte Übertragungselemente (4, 7, 11) mit der Kunststoffarbeitsplatte (10) in Eingriff steht.

6. Hackblock nach Anspruch 5, dadurch gekennzeichnet, daß die den Eingriff mit der Kunststoff-arbeitsplatte (10) herstellenden Übertragungs-elemente als Spannschrauben (7) ausgebildet sind, die mittels auf ihre Oberenden aufgeschraubter Nutensteine (11) in auf der Unterseite der Kunststoffarbeitsplatte (10) ausgebildete T-förmige Nuten (80) eingreifen.

7. Hackblock nach Anspruch 6, dadurch gekennzeichnet, daß jede Spannschraube (7) zu ihrer Vorspannung gegen die Kunststoffarbeitsplatte (10) mit einer Druckscheibe (12) versehen ist, die einerseits durch eine Mutter (13) axial auf der Spannschraube (7) fixiert wird und andererseits eine die Spannschraube (7) umgebende Mantelfeder (6) in Richtung auf die Kunststoffarbeitsplatte (10) zusammendrückt.

8. Hackblock nach Anspruch 7, dadurch gekennzeichnet, daß die Mantelfeder (6) aus einem Fibroflex-Werkstoff hergestellt ist.

9. Hackblock nach einem der Ansprüche 6 bis 8, dadurch gekennzeichnet, daß am Unterende der Spannschrauben (7) mittels einer Mutter (14) ein Schraubenverbindungselement (4) befestigt ist, das über einen Nabenabschnitt (40, 41), der fest mit dem Schraubenverbindungselement (4) verbunden ist und zwischen zwei Bundscheiben (8) axial auf der Gewindespindel (5) fixiert ist, mit der Gewindespindel (5) verbunden ist.

10. Hackblock nach einem der Ansprüche 6 bis 9, dadurch gekennzeichnet, daß die Spannschrauben (7) die Stahlplatte (2) durch in derselben ausgebildete Bohrungen (22) durchgreifen.

11. Hackblock nach Anspruch 10, dadurch gekennzeichnet, daß die Stahlplatte (2) in ihrer Ausdehnung im wesentlichen der Ausdehnung der Kunststoffarbeitsplatte (10) entspricht.

12. Hackblock nach einem der Ansprüche 10 oder 11, dadurch gekennzeichnet, daß der Aufnahmerahmen (100) die Spanneinrichtung (30) aufnimmt und lediglich in seinem Mittelabschnitt vom Unterende der Gewindespindel (5), auf dem das Handrad (3) sitzt, durchragt wird.

**Revendications**

1. Billot pour matière à base de viande et d'os, avec un bâti de base (1), à l'extrémité supérieure duquel est disposé ou réalisé un cadre récepteur (100), qui porte à son tour une plaque de travail en matière plastique (10), caractérisé en ce qu'entre le cadre récepteur (100) et la plaque de travail en matière plastique (10) est disposée une masse (2) comparativement grande, reposant fixe sur la cadre récepteur (100) et portant un dispositif de serrage (30) à l'aide duquel la plaque de travail en matière plastique (10) peut être bloquée contre la plaque (2).

2. Billot selon la revendication 1, caractérisé en ce que, sur son bord, la plaque (2) présente des perçages (20) dans lesquels s'engagent des trouil-lons (15) réalisés de manière correspondante sur le cadre récepteur (100).

3. Billot selon la revendication 1 ou 2, caractérisé en ce que des rondelles d'amortissement (9) reposent entre la plaque (2) et le cadre récepteur (100).

4. Billot selon la revendication 2 ou 3, caractérisé en ce qu'une rondelle d'amortissement (9) est disposée autour de chaque tourillon (15).

5. Billot selon l'une des revendications 1 à 4, caractérisé en ce que la plaque est formée par une plaque d'acier (2) qui présente dans sa section centrale un taraudage (21) dans lequel une broche filetée (5) s'engage, par sa section d'extrémité supérieure, et est reliée en rotation à un volant (3), monté sur sa section d'extrémité opposée, et est contact avec la plaque de travail en matière plastique (10) par l'intermédiaire d'éléments de transmission (4, 7, 11) fixes axialement sur la broche.

6. Billot selon la revendication 5, caractérisé en ce que les éléments de transmission constituant l'engagement avec la plaque de travail en matière plastique (10) sont réalisés sous forme de vis de serrage (7) s'engageant, au moyen de coulisseaux (11) fixés par vissage sur leurs extrémités supérieures, dans des rainures en T (80) réalisées sur la face inférieure de la plaque de travail en matière plastique (10).

7. Billot selon la revendication 6, caractérisé en ce qu'en vue de sa précontrainte contre la plaque de travail en matière plastique (10), chaque vis de serrage (7) est pourvue à son extrémité d'une rondelle de pression (12) fixée d'une part axialement au moyen d'un écrou (13) sur la vis de serrage (7) et comprimant d'autre part en direction de la plaque de travail en matière plastique (10) un ressort à douille (6) entourant la vis de serrage (7).

8. Billot selon la revendication 7, caractérisé en ce que le ressort à douille (6) est en un matériaux fibreux et flexible.

9. Billot selon l'une des revendications 6 à 8, caractérisé en ce qu'a l'extrémité inférieure des vis de serrage (7) est fixé au moyen d'un écrou (14) un élément de liaison à vis (4) qui est relié à la broche filetée (5) par l'intermédiaire d'une section de moyen (40, 41), reliée fermement à l'élément de liaison à vis (4) et bloquée axialement sur la broche filetée (5), entre deux rondelles d'embase (8).

10. Billot selon l'une des revendications 6 à 9, caractérisé en ce que les vis de serrage (7) traversent la plaque d'acier (2), en passant dans des perçages (22) réalisés dans celle-ci.

11. Billot selon la revendication 10, caractérisé en ce que les dimensions de la plaque d'acier (2) correspondent sensiblement à celles de la plaque de travail en matière plastique (10).

12. Billot selon l'une des revendications 10 ou 11, caractérisé en ce que le cadre récepteur (100) loge la dispositif de serrage (30) et est traversé uniquement dans sa section centrale par l'extrémité inférieure de la broche filetée (5) sur laquelle repose le volant (3).

**Claims**

1. Chopping block for meat and bone material, with a base stand (1), on the upper end of which a receiving frame (100) is arranged or formed, which in turn supports a plastic work surface (10), characterized in that, between the receiving frame (100) and the plastic work surface (10), a plate (2) of comparatively great mass is arranged, which is located in a stationary manner on the receiving frame (100) and bears a clamping device (30), by means of which the plastic work surface (10) can be braced against the plate (2).

2. Chopping block according to Claim 1, characterized in that the plate (2) has bores (20) at its edge, into which bores (20) correspondingly formed pegs (15) on the receiving frame (100) engage.

3. Chopping block according to Claim 1 or 2, characterized in that damping washers (9) are located between the plate (2) and the receiving frame (100).

4. Chopping block according to Claim 2 and 3, characterized in that a damping washer (9) is arranged around every peg (15).

5. Chopping block according to one of Claims 1 to 4, characterized in that the plate is formed from a steel plate (2) which, in its central section, has a threaded bore (21), in which a threaded spindle (5) engages with its upper end section, which spindle, via its opposite end section, is connected in a rotationally fixed manner to a handwheel (3) and, via transmission elements (4, 7, 11) which are fixed on it in an axial manner, is in engagement with the plastic work surface (10).

6. Chopping block according to Claim 5, characterized in that the transmission elements which bring about the engagement with the plastic work surface (10) are designed as clamping screws (7) which, by means of tenon blocks (11) screwed onto their upper ends, engage in T-shaped grooves (80) formed on the underside of the plastic work surface (10).

7. Chopping block according to Claim 6, characterized in that each clamping screw (7), for its pretensioning against the plastic work surface (10), is provided with a pressure washer (12) which on the one hand is fixed axially on the clamping screw (7) by means of a nut (13) and on the other hand compresses, in a direction towards the plastic work surface (10), a jacket spring (6) which surrounds the clamping screw (7).

8. Chopping block according to Claim 7, characterized in that the jacket spring (6) is made from a Fibroflex material.

9. Chopping block according to one of Claims 6 to 8, characterized in that, on the lower end of the clamping screws (7), a screw connection element (4) is fastened by means of a nut (14), which screw connection element (4) is connected to the threaded spindle (5) via a hub section (40, 41) which is rigidly connected to the screw connection element (4) and is fixed axially on the threaded spindle (5) between two collar washers (8).

10. Chopping block according to one of Claims 6 to 9, characterized in that the clamping screws (7) extend through the steel plate (2) through bores (22) formed in the latter.

11. Chopping block according to Claim 10, characterized in that the steel plate (2) corresponds essentially in its extent to the extent of the plastic work surface (10).

12. Chopping block according to one of Claims 10 or 11, characterized in that the receiving frame (100) receives the clamping device (30) and is passed through only in its central section by the lower end of the threaded spindle (5), on which the handwheel (3) is located.